# EUROPÄISCHE PATENTSCHRIFT

(11) **EP 0 356 530 B1**
(45) Veröffentlichungstag und Bekanntmachung des Hinweises auf die Patenterteilung: **12.05.1993**
(21) Anmeldenummer: 88111460.7
(22) Anmeldetag: 16.07.1988
(51) Int. Cl.: H04Q 9/00, H04L 12/28

(54) **Dialogsystem**
Dialogue system
Système de dialogue

(43) Veröffentlichungstag der Anmeldung: 07.03.1990
(73) Patentinhaber: HONEYWELL AG, 63067 Offenbach (DE)
(72) Erfinder: Ehlers, Dieter, Dipl.-Ing., D-6052 Mühlheim (DE); Kahle, Arno, Dipl.-Ing., D-6450 Hanau (DE); Scheler, Bernd, Dipl.-Ing., D-6482 Bad Orb (DE); Daab, Heinz, Ing. grad., D-6100 Darmstadt (DE)
(74) Vertreter: Herzbach, Dieter, Dipl.-Ing.

(56) Entgegenhaltungen:
- EP-A- 0 044 685
- DE-A- 3 436 235
- GB-A- 2 172 725
- US-A- 4 046 959
- US-A- 4 328 586
- IBM TECHNICAL DISCLOSURE BULLETIN, Band 27, Nr. 7A, Dezember 1984, Seite 3976, New York, US; H. LIDA et al.: "Method of LSI personalization after resetting"

## Beschreibung

Die vorliegende Erfindung bezieht sich auf ein Dialogsystem nach dem Gattungsbegriff des Patentanspruches 1.

Ein derartiges Dialogsystem ist aus der US-A-4 328 586 bekannt. Das bekannte System verwendet einen Bus mit drei Leitungen zwischen einer Zentralstation und mehreren Unterstationen, wobei eine Leitung der Datenübertragung in beiden Richtungen zwischen der Zentralstation und den Unterstationen dient und die beiden weiteren Leitungen zur Spannungsversorgung auf einem vorgegebenen Potential liegen bzw. an Masse angeschlossen sind. Sämtliche Sende- und Empfangseinrichtungen sowohl in der Zentralstation als auch in den Unterstationen liegen parallel zu der Datenleitung.

Ausgehend von diesem bekannten Dialogsystem ist es die Aufgabe der vorliegenden Erfindung, dieses in der Weise zu verbessern, daß mit einfachen Mitteln sowohl eine Datenübertragung zwischen den Stationen als auch eine Stromversorgung der Unterstationen bzw. eine Ansteuerung von in diesen Unterstationen enthaltenen Stellgliedern möglich ist. Die Lösung dieser Aufgabe gelingt gemäß den kennzeichnenden Merkmalen des Patentanspruches 1. Weitere vorteilhafte Ausgestaltungen des erfindungsgemäßen Dialogsystems sind den abhängigen Ansprüchen entnehmbar.

Anhand der Figuren der beiliegenden Zeichnung sei im folgenden ein Ausführungsbeispiel des erfindungsgemäßen Dialogsystems näher beschrieben. Es zeigen:
- Fig. 1: den prinzipiellen Aufbau des erfindungsgemäßen Dialogsystems;
- Fig. 2: den Aufbau einer Unterstation in näheren Einzelheiten;
- Fig. 3: ein Diagramm zur Veranschaulichung der Bus-Initialisierung; und
- Fig.: 4 ein Bus-Zeittaktdiagramm.

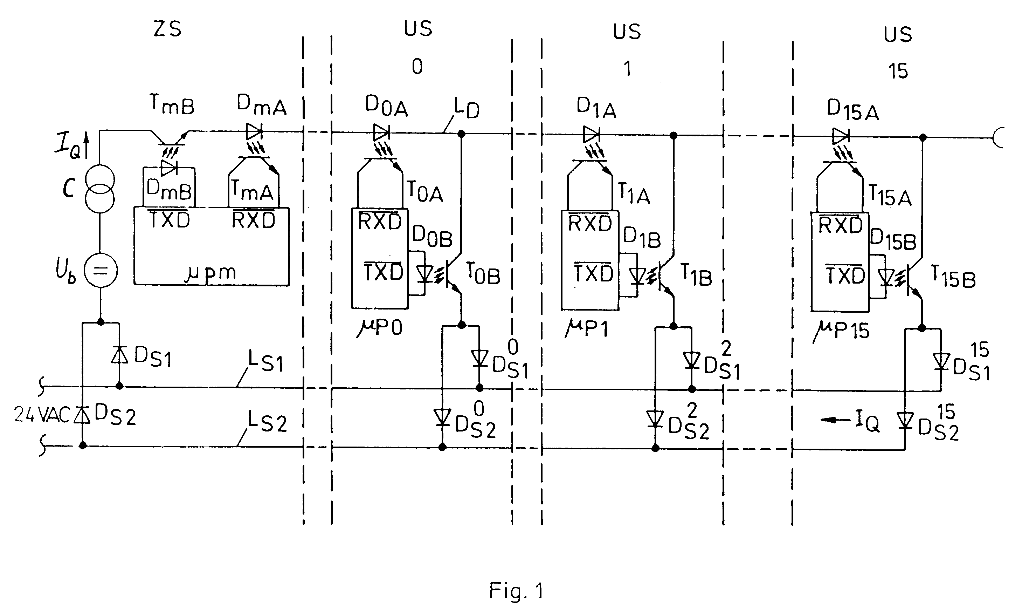

Gemäß Fig. 1 besteht das Dialogsystem aus einer Zentralstation ZS und einer Reihe von Unterstationen US0 bis US15, die über einen Bus bestehend aus drei Leitungen LD, LS1 und LS2 miteinander verbunden sind. Die Leitung LD dient der Datenübertragung zwischen der Zentralstation ZS und den Unterstationen US und die Leitungen LS1 und LS2 führen eine Wechselspannung von vorzugsweise 24V, aus welcher Wechselspannung die Versorgungsspannung der Unterstationen sichergestellt wird und die zudem mit der Datenleitung LD eine Ringleitung für die Datenübertragung bilden. Zudem kann diese Wechselspannung für den Antrieb von hier nicht dargestellten Stellgliedern herangezogen werden. Dioden DS1 bis DS1¹⁵ sowie DS2 bis DS2¹⁵ stellen während jeder Halbwelle der Wechselspannung sicher, daß die Ringleitung für die Datenübertragung geschlossen ist.

Die Zentralstation ZS weist eine Konstant-Spannungsquelle U_{b} und eine dazu in Reihe geschaltete Stromquelle C auf, deren konstanter Strom I_{Q} sowohl von der Zentralstation ZS als auch von den Unterstationen US gemäß einem Bitmuster durch entsprechende Sendeeinrichtungen moduliert werden Kann. Die Sendeeinrichtung der Zentralstation ZS besteht aus einem Optokoppler, weicher eine lichtemittierende Diode DmB und einen Phototransistor TmB umfaßt, wobei der Phototransistor mit seinem Hauptstrompfad in der Datenleitung LD liegt und die lichtemittierende Diode von einem Mikroprozessor µpm der Zentralstation ZS angesteuert wird. Das von der Zentralstation gesendete Bitmuster kann von Empfangseinrichtungen in den Unterstationen empfangen werden, wobei diese ebenfalls als Optokoppler ausgebildet sind und eine lichtemittierende Diode D0A bis D15A in der Datenleitung LD und einen Phototransistor T0A bis T15A umfassen. Die Phototransistoren sind hierbei an den Empfangseingang R̅x̅D̅ eines jeden Mikroprozessors µp0 bis µp15 der Unterstationen angeschlossen.

Jede Unterstation US0 bis US15 weist eine Sendeeinrichtung in Form eines Optokopplers auf, der lichtemittierende Dioden D0B bis D15B und Phototransistoren T0B bis T15B umfaßt. Die lichtemittierenden Dioden sind hierbei an den Datenausgang T̅x̅D̅ der Mikroprozessoren µp0 bis µp15 angeschlossen und die Phototransistoren T0B bis T15B verbinden jeweils die Datenleitung LD mit den Leitungen LS1 bzw. LS2 über die Dioden DS1 und DS2. Die Unterstationen können mittels dieser Sendeeinrichtungen Information an die Zentralstation senden, indem sie den durch den Querzweig fließenden Strom entsprechend modulieren. Zu diesem Zweck muß die Sendeeinrichtung DmB, TmB in der Zentralstation ZS geschlossen sein, damit eine hierzu in Reine liegende Empfangseinrichtung bestehend aus einem weiteren Optokoppler das gesendete Bitmuster erfassen und dem Mikroprozessor µpm der Zentralstation an seinem Dateneingang R̅x̅D̅ zuführen kann.

Das in der Figur 1 dargestellte Dialogsystem arbeitet in der Weise, daß die Sendeeinrichtung T15B in der letzten Unterstation US15 anfänglich geschlossen ist, so daß die Zentralstation ZS den durch alle Unterstationen im Längszweig fließenden Strom modulieren kann. Wenn die Zentralstation eine Unterstation adressiert und Daten von dieser anfordert, so öffnet der Phototransistor T15B in der letzten Unterstation US15 der Kette und der sich an einer beliebigen Stelle befindliche und adressierte Modul USx kann nun, nachdem er über seine Adresse aufgerufen wurde, durch getaktetes Schließen seiner Sendeeinrichtung TxB den von der Zentralstation bereitgestellten Strom modulieren, wobei die Empfangseinrichtung der Zentralstation die gesendete Information empfängt. Der Phototransistor TmB in der Zentralstation ist hierbei permanent geschlossen. Wenn eine sich an beliebiger Stelle befindliche Unterstation USx irgendwelche Daten überträgt, so können alle Unterstationen mit höherer Adresse die gesendeten Daten nicht lesen.

Bei dem hier vorliegenden Dialogsystem sind bis zu 16 Unterstationen an die Zentralstation angeschlossen. Die Zuteilung der Adressen zu den Unterstationen erfolgt automatisch während der Initialisierung des Systems in der Reihenfolge, in der die Unterstationen an den Bus angeschlossen sind. Dies verhindert bei geringem Installations- und Zeitaufwand eine falsche manuelle Adressierung und erspart Aufwand an Hardware. Diese Adressenzuteilung wird später noch näher beschrieben.

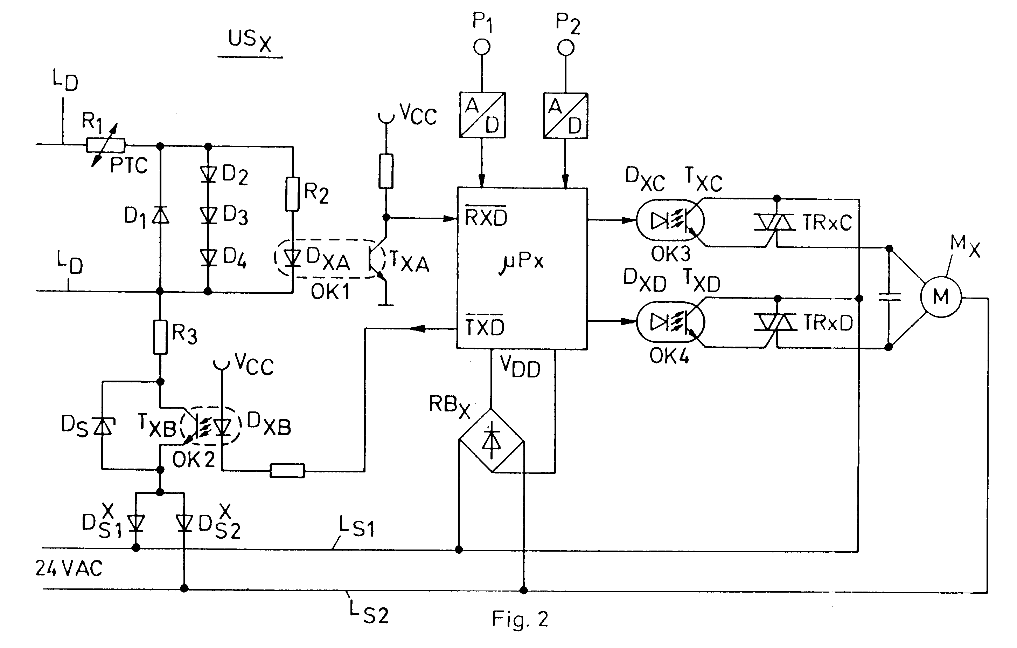

Figur 2 zeigt den näheren Aufbau einer beliebigen Unterstation USx. Diese Unterstation kann über die Datenleitung LD adressiert werden, wobei ein erster Optokoppler OK1 bestehend aus der lichtemittierenden Diode DxA und dem Phototransistor TxA das Adreßsignal erfaßt und dieses dem Mikroprozessor µpx an seinem Dateneingang R̅x̅D̅ zuführt. Der Mikroprozessor µpx wird hierbei über eine Gleichrichterbrücke RBx, welche an die Wechselspannungsleitungen LS1 und LS2 angeschlossen ist, mit Spannung versorgt. Der Mikroprozessor µpx kann über den Optokoppler OK1 ebenfalls eine codierte Stellinformation von der Zentralstation zugeführt erhalten, aufgrund welcher er ein Stellsignal an ein Stellglied, z.B. den Motor Mx, ausgibt. Die Ausgabe des Stellsignals erfolgt ebenfalls über Optokoppler OK3 und OK4, die entsprechende lichtemittierende Dioden DxC, DxD und Phototransistoren TxC, TxD umfassen und die Triacs TRxC und TRxD für den Rechts- und den Linkslauf des Motors ansteuern.

Ferner kann die Unterstation USx Information an die Zentralstation übermitteln, indem z.B. die an den Meßpunkten P1 und P2 gemessenen Analogsignale nach Analog/Digital-Wandlung dem Mikroprozessor µpx zugeführt werden und dieser an seinem Datenausgang T̅x̅D̅ ein codiertes Signal ausgibt, mit welchem ein Optokoppler OK2, bestehend aus der lichtemittierenden Diode DxB und dem Phototransistor TxB, angesteuert wird, wodurch das von der Datenleitung LD nach den Wechselspannungsleitungen LS1 bzw. LS2 fließende Gleichstromsignal entsprechend moduliert wird.

Das Stellglied in Form des Motors Mx und die Meßpunkte P1, P2 dienen nur als Beispiele; insgesamt weist jede Unterstation bis zu 16 analoge und 16 digitale Ein- und Ausgänge auf.

Die in Figur 2 noch weiter dargestellten Komponenten, wie beispielsweise die Widerstände R1 bis R3 und die Dioden D1 bis D5 gehören zu einer Schutzbeschaltung und sind für die vorliegende Erfindung nicht von näherer Bedeutung.

Die verwendeten Mikroprozessoren sind 8-Bit-Mikroprozessoren. Da jedoch analoge Meßwerte durch 12 Bit codiert werden, erfolgt die digitale Meßwertübertragung mittels zweier Datenbytes von 8 Bit plus einem Prüfsummenbyte, das durch das ler-Komplement von Datenbyte 1 und Datenbyte 2 gebildet wird. Die Adressierung der Unterstationen erfolgt über ein von der Zentralstation ausgegebenes Steuerbyte, dessen höchstwertigstes Bit auf "1" gesetzt ist und dessen vier niedrigwertigsten Bits die Adresse der 16 Unterstationen codiert vorgeben. Weitere Einzelheiten bezüglich des Busprotokolls interessieren in diesem Zusammenhang nicht.

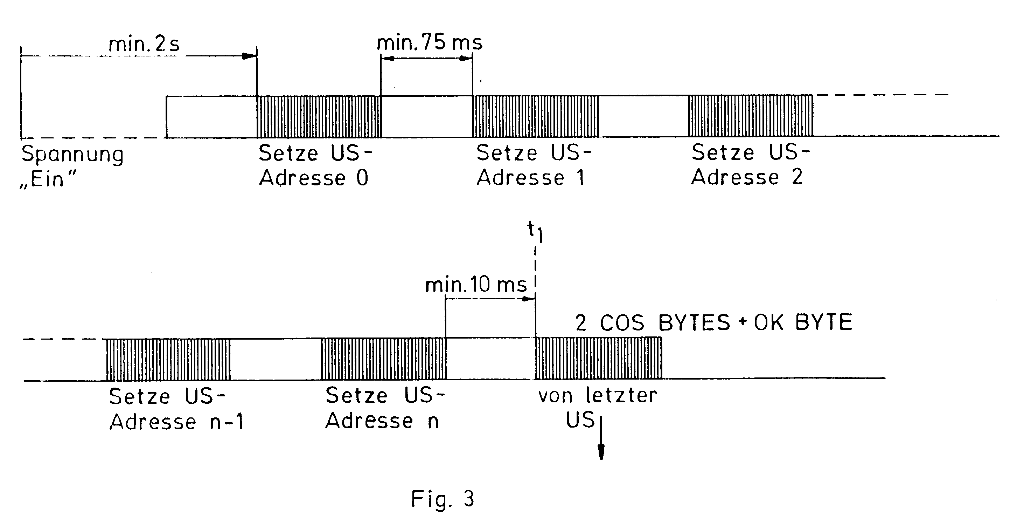

Anhand von Figur 3 sei im folgenden die Businitialisierung erläutert. Nach der Spannungseinschaltung bzw. nach einem Spannungsausfall erzeugen alle Mikroprozessoren in den Unterstationen einen Reset, woraufhin alle Sendetransistoren T0B bis T15B geschlossen werden. Daraufhin sendet die Zentralstation eine Anweisung "Setze US-Adresse 0". Nur die Unterstation US0, die unmittelbar der Zentralstation ZS benachbart ist, erkennt diese Anweisung. Sie macht die Adresse dieser Anweisung zu ihrer eigenen und schaltet ihren Sendetransistor T0B 10ms nach dem zweiten Stoppbit der ZS-Anweisung aus. Dies bedeutet, daß der Strom nunmehr durch die nächste Unterstation US1 fließt.

In dem Fall, wo eine Unterstation ihren Sendetransistor TxB abgeschaltet hat und mit ihrer Empfangsdiode DxA keinen Strom mehr erfaßt, weiß diese Unterstation USx, daß sie die letzte Station an dem Bus ist. In diesem Fall muß sie den Rahmen für fünf Bytes bereitstellen und mit der fallenden Flanke der Stromunterbrechung als Startbit eine Bestätigung an die Zentralstation schicken. Danach übernimmt diese Unterstation die Steuerung des Buses.

Wenn es sich nicht um die letzte Unterstation an dem Bus handelt, so wartet die Zentralstation, nachdem sie die Anweisung "Setze US-Adresse x" ausgesendet hat, während 15ms auf eine Nachricht. Wenn die Zentralstation die zuvor erwähnte Bestätigung in dieser Zeit nicht erhält, so gibt sie nach weiteren 60ms die Anweisung "Setze US-Adresse x+1" aus. Diese Adressierung setzt sich fort, bis die letzte Unterstation in der Kette adressiert ist.

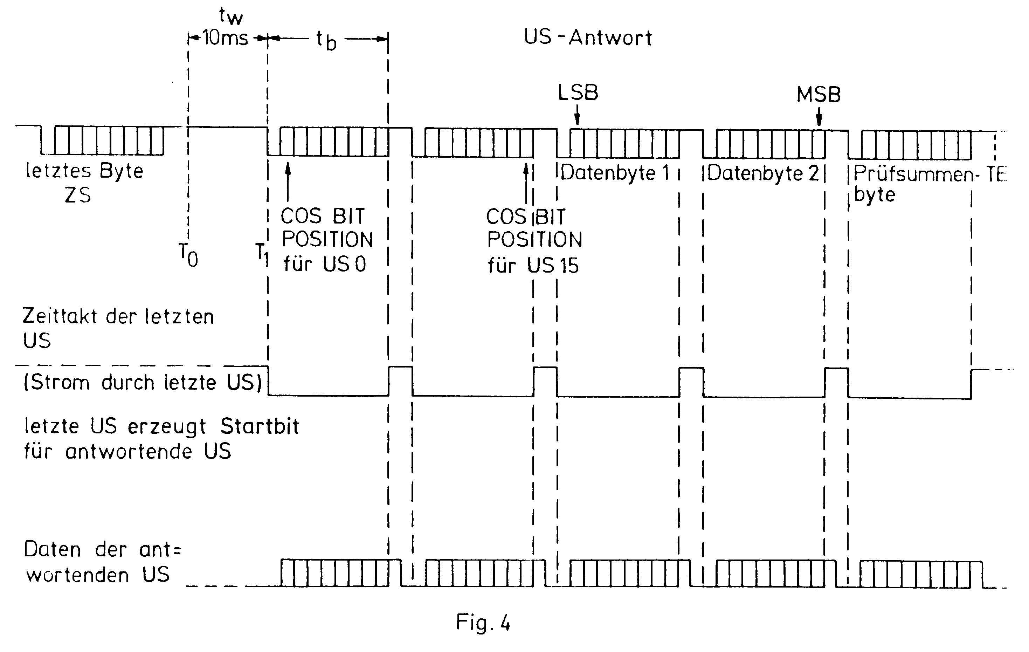

Fig. 4 zeigt von der Zentralstation ausgesehen das Zeittaktdiagramm des Busses. Hierbei ist nochmals vorauszuschicken, daß immer die letzte Unterstation an dem Bus die Bussteuerung übernimmt und nach einer Anweisung der Zentralstation an eine davorliegende Unterstation den Bus über den Sendetransistor TxB zu öffnen hat und durch Schließen dieses Sendetransistors fünf Startbits erzeugen muß. Dies gestattet der angeforderten Unterstation, maximal fünf Datenbytes zu senden. Die ersten beiden Bytes sind hierbei Zustandsänderungsbytes (COS = Change of State), wobei in dem ersten COS-Byte die Unterstationen US0 bis US7 ein Bit an entsprechender Stelle setzen können, um der Zentralstation die Adreßnummer der anfordernden Unterstation anzuzeigen. In gleicher Weise können die Unterstationen US8 bis US15 ein Bit an entsprechender Stelle in dem zweiten COS-Byte setzen, um der Zentralstation die Adreßnummer der anfordernden Unterstation anzuzeigen. Auf die beiden COS-Bytes folgen die angeforderten Daten in zwei Datenbytes und einem Prüfsummenbyte.

Gemäß Fig. 4 muß nach einer Anforderung durch die Zentralstation, die nach dem zweiten Stoppbit im Zeitpunkt T0 endet, die die Steuerung des Busses übernehmende Unterstation (die letzte in der Kette) während der Wartezeit t_{w} 10ms warten, um sodann für die Dauer t_{b} von 9 Bit die durch den Bus vorgegebene Stromschleife zu öffnen. Hierdurch wird die fallende Flanke im Zeitpunkt T1 hervorgerufen. Nach dem Auftreten dieser Flanke können die Unterstationen US0 bis US7 ihr entsprechendes COS-Bit in dem ersten COS-Byte setzen. Nach 9 Bit schließt die letzte Unterstation in der Kette den Bus für die Dauer von 2 Bit (2 Stoppbits). Danach öffnet diese Unterstation den Bus erneut für die Dauer von 9 Bit, woraufhin die Unterstationen US8 bis US15 durch Setzen eines COS-Bits an entsprechender Stelle in dem zweiten COS-Byte der Zentralstation anzeigen können, welche Unterstation eine Behandlung anfordert. Auf diese Weise gestattet die letzte Unterstation in der Kette die Erzeugung von 5 Bytes durch die jeweils adressierte Unterstation. Diese 5 Byte umfassen zwei COS-Bytes, zwei Datenbytes und ein Prüfsummenbyte. Jedem Byte geht ein Startbit voraus und jedem Byte folgen zwei Stoppbits.

## Patentansprüche

1. Dialogsystem bestehend aus einer Zentralstation (ZS) und mehreren Unterstationen (US), die über einen Bus miteinander verbunden sind, wobei der Bus eine Datenleitung (LD) und zwei Spannungsversorgungsleitungen (LS1, LS2) aufweist, **dadurch gekennzeich-net,** daß die Spannungsversorgungsleitungen (LS1, LS2) eine Wechselspannung führen und diese Wechselspannungsleitungen den Ring für die Datenleitung (LD) schließen, daß die Zentralstation (ZS) in der Datenleitung (LD) in Reihe geschaltet eine Datensendeeinrichtung (DmB, TmB) und eine Datenempfangseinrichtung (DmA, TmA) aufweist und daß die Unterstationen (US0 - US15) in der Datenleitung (LD) jeweils eine Datenempfangseinrichtung (D0A, T0A bis D15A, T15A) und zwischen der Datenleitung (LD) und den beiden Wechselspannungsleitungen (LS1, LS2) jeweils eine Datensendeeinrichtung (D0B - D15B, T0B - T15B) aufweisen, die jeweils über Dioden (DS1⁰ - DS1¹⁵, DS2⁰ - DS2¹⁵) an die Wechselspannungsleitungen (LS1, LS2) angeschlossen sind.

2. Dialogsystem nach Anspruch 1, **gekennzeichnet durch** eine Gleichstromquelle (IQ) in der Zentralstation (ZS), deren Strom durch die Datensendeeinrichtungen (TmB, T0B - T15B) entsprechend einem codierten Wort modulierbar ist, um Adressen- und Dateninformation zu übertragen.

3. Dialogsystem nach Anspruch 2 , **gekennzeichnet durch** Mikroprozessoren (µpm, µp0 - µp15), sowohl in der Zentralstation (ZS) als auch in den Unterstationen (US0 - US15), die an die Datensendeeinrichtungen und Datenempfangseinrichtungen angeschlossen sind.

4. Dialogsystem nach Anspruch 3, **dadurch gekennzeichnet,** daß die Speisespannung (V_{DD}) der Mikroprozessoren (µpm, µp0 - µp15) durch Gleichrichtung der Wechselspannung gewonnen wird.

5. Dialogsystem nach Anspruch 4, **gekennzeichnet durch** Stellglieder (Mx) in den Unterstationen (USX), die durch die Wechselspannung gespeist werden und deren Steuerung durch den Mikroprozessor (µpx) erfolgt.

6. Dialogsystem nach einem der Ansprüche 1 bis 5, **gekennzeichnet durch** Optokoppler als Sende- und Empfangseinrichtungen für die Adressen bzw. Daten und als Steuereinrichtungen für die Stellglieder.

7. Dialogsystem nach einem der Ansprüche 1 bis 6, **dadurch gekennzeichnet,** daß die letzte Unterstation (USx) in der Kette die Steuerung des Busses übernimmt, in dem sie über ihre Sendeeinrichtung (TxB) die Schleife schließt und bei einer Anforderung einer davorliegenden Unterstation durch die Zentralstation durch Auftrennen der Schleife dieser davorliegenden Unterstation die Informationsübertragung gestattet.

8. Dialogsystem nach einem der Ansprüche 1 bis 6, **dadurch gekennzeichnet,** daß bei der Initialisierung des Busses alle Sendeeinrichtungen (T0B - T15B) geschlossen sind, so daß die Adressenzuteilung zu den Unterstationen in der Reihenfolge ihrer Anordnung erfolgt, indem die Sendeeinrichtung einer adressierten Unterstation jeweils gesperrt wird, falls die Empfangseinrichtung einen Stromdurchgang feststellt.

## Claims

1. Dialogue system comprising a central station (ZS) and a plurality of sub-stations (US), which are connected to each other by means of a bus, whereat the bus comprises a data wire (LD) and two voltage supply wires (LS1, LS2), **characterized in that** the voltage supply wires (LS1, LS2) are fed with an AC voltage, and those AC voltage wires are closing the loop for the data wire (LD), that the central station (ZS) comprises a series connection of a data transmitting device (DmB, TmB) and of a data receiving device (DmA, TmA) within said data wire (LD) and that the sub-stations (US0-US15) each comprise a data receiving device (D0A, T0A to D15A, T15A) within the data wire (LD) and between the data wire (LD) and both AC voltage wires (LS1, LS2) a data transmitting device (D0B-D15B, T0B-T15B) with each device being connected to the AC voltage wires (LS1, LS2) by means of diodes (DS1⁰-DS1¹⁵, DS2⁰-DS2¹⁵).

2. Dialogue system according to claim 1, **characterized by** a DC source (IQ) within the central station (CS), the current of which is modulated according to a coded word by means of the data transmitting devices (TmB, T0B-T15B) in order to transfer address and data information.

3. Dialogue system according to claim 2, **characterized by** microprocessors (µpm, µp0-µp15) within the central station (CS) as well as within the sub-stations (US0-US15) which are connection to the data transmitting devices and to the data receiving devices.

4. Dialogue system according to claim 3, **characterized in that** the supply voltage (V_{DT}) of the microprocessors (µpm, µp0-µp15) is generated by rectifying the AC voltage.

5. Dialogue system according to claim 4, **characterized by** final control elements (Mx) within the sub-stations (USX) which are supplied by the AC voltage and the control of which is done by the microprocessor (µpx).

6. Dialogue system according to one of claims 1 to 5, **characterized by** opto-couplers as transmitting and receiving devices for the addresses and data, respectively, and as control devices for the final control elements.

7. Dialogue system according to one of claims 1 to 6, **characterized in that** the last sub-station (USx) within the chain of sub-stations takes over the control of the bus by closing the loop by means of its transmitting device (TxB) and that at a request from the central station to a sub-station in front of said last sub-station and by opening the loop said last sub-station allows a sub-station in front of it to transfer information.

8. Dialogue system according to one of claims 1 to 6, **characterized in that** at the initialization of the bus all transmitting devices (T0B-T15B) are closed so that address allocation to the sub-stations is made in the sequence of their physical location by inhibiting the transmitting device of an addressed sub-station in the event where the receiving device detects a current flow.

## Revendications

1. Système de dialogue constitué par un poste central (ZS) et plusieurs postes secondaires (US), qui sont raccordés entre eux par l'intermédiaire d'un bus, ce bus possédant une ligne de transmission de données (LD) et deux lignes d'alimentation en tension (LS1, LS2), caractérisé en ce que les lignes d'alimentation en tension (LS1, LS2) véhiculent une tension alternative et que ces lignes à tension alternative ferment l'anneau pour la ligne de transmission de données (LD), en ce que le poste central (ZS) possède, branchés en série dans la ligne de transmission de données (LD), un dispositif d'émission de données (DmB, TmB) et un dispositif de réception de données (DmA, TmA), et en ce que les postes secondaires (US0 - US15) situés dans la ligne de transmission de données (LD) possèdent chacun un dispositif de réception de données (D0A, T0A à D15A, T15A) et, entre la ligne de transmission de données (LD) et les deux lignes à tension alternative (LS1, LS2), respectivement un dispositif d'émission de données (D0B - D15B, T0B - T15B), qui sont raccordés respectivement par l'intermédiaire de diodes (DS1⁰ - DS1¹⁵, DS2⁰ - DS2¹⁵) aux lignes à tension alternative (LS1, LS2).

2. Système de dialogue selon la revendication 1, caractérisé par une source de courant continue (IQ) située dans le poste central (ZS), et dont le courant peut être modulé par les dispositifs d'émission de données (TmB, T0B - T15B) conformément à un mot codé, pour la transmission d'informations d'adresses et de données.

3. Système de dialogue selon la revendication 2, caractérisé par des microprocesseurs (µpm, µp0-µp15) situés aussi bien dans le poste central (ZS) que dans les postes secondaires (US0 - US15), et qui sont raccordés aux dispositifs d'émission de données et aux dispositifs de réception de données.

4. Système de dialogue selon la revendication 3, caractérisé en ce que la tension d'alimentation (V_{DD}) des microprocesseurs (µpm, µp0-µp15) est obtenue par redressement de la tension alternative.

5. Système de dialogue selon la revendication 4, caractérisé par des éléments de réglage (Mx) situés dans les postes secondaires (USx), qui sont alimentés par la tension alternative, et dont la commande est réalisée par le microprocesseur (µpx).

6. Système de dialogue selon l'une des revendications 1 à 5, caractérisé par des optocoupleurs en tant que dispositifs d'émission et de réception pour les adresses ou les données et en tant que dispositifs de commande pour les éléments de réglage.

7. Système de dialogue selon l'une des revendications 1 à 6, caractérisé en ce que le dernier poste secondaire (USx) de la chaîne assure la commande du bus, par le fait qu'il ferme la boucle au moyen de son dispositif d'émission (TxB) et, dans le cas d'une demande d'un poste secondaire amont, permet la transmission d'informations par le poste central au moyen d'une séparation de la boucle de ce poste secondaire amont.

8. Système de dialogue selon l'une des revendications 1 à 6, caractérisé en ce que lors de l'initialisation du bus, tous les dispositifs d'émission (T0B - T15B) sont fermés, de sorte que l'affectation d'adresses aux postes secondaires s'effectue dans la succession de leur disposition par le fait que le dispositif d'émission d'un poste secondaire adressé est respectivement bloqué dans le cas où le dispositif de réception détermine un passage de courant.
